# EUROPÄISCHE PATENTANMELDUNG

(11) **EP 1 238 939 A2**
(43) Veröffentlichungstag der Anmeldung: **11.09.2002**
(21) Anmeldenummer: 02004873.2
(22) Anmeldetag: 04.03.2002
(51) Int. Cl.: B66F 9/075, B62D 5/30

(54) **Vorrichtung und Verfahren zur Sicherstellung der Lenkbarkeit eines Flurförderzeugs**

(30) Priorität: 08.03.2001 DE 10111234
(71) Anmelder: STILL GMBH, D-22113 Hamburg (DE)
(72) Erfinder: Neuf, Ottmar, 21465 Reinbek (DE); Bavendiek, Rainer, Dr., 21465 Wentorf (DE); Macit, Recep, 40625 Düsseldorf (DE)
(74) Vertreter: Lang, Michael (DE)

(57) **Zusammenfassung**

Die Erfindung betrifft eine Vorrichtung und ein Verfahren zur Sicherstellung der Lenkbarkeit eines Flurförderzeugs mit einer hydraulischen Lenkung. Die Erfindung ist gekennzeichnet durch mindestens eine Gaserzeugungspatrone (8) sowie ein Mittel (16) zur Aktivierung einer Gaserzeugung. Dadurch steht mit besonderem Vorteil im Bedarfsfall Energie für den Hydraulikkreis einer hydraulischen Lenkung zur Verfügung. Auf Seiten der Gaserzeugungspatrone (8) wird bei Bedarf für eine Energiezufuhr an den Hydraulikkreis Druck aufgebaut, der dann auf das Hydraulikmedium übertragbar ist. Die Erfindung stellt ein vorteilhaftes Notenergieversorgungsystem für eine hydraulische Lenkung eines Flurförderzeugs zur Verfügung.

## Beschreibung

Die Erfindung betrifft eine Vorrichtung und ein Verfahren zur Sicherstellung der Lenkbarkeit eines Flurförderzeugs mit einer hydraulischen Lenkung.

Hydraulische Lenkungen stellen bei Flurförderzeugen in Fahrersitzausführung die standardmäßige Ausführung der Lenkung dar. Bei dieser Art der Lenkung wird die Lenkkraft des Fahrers (mechanische Lenkung) durch Hydraulik unterstützt. Dabei wird vom Motor des Flurförderzeugs eine Hydraulikpumpe angetrieben. Durch den über das Hydraulikmedium auf den Lenkzylinder wirkenden Druck wird die Lenkkraft verstärkt. Bei einer (voll-)hydraulischen Lenkung kann nur mit laufendem Motor gelenkt werden. Eine hydraulische Lenkung kann darüber hinaus elektrisch unterstützt werden (elektro-hydraulische Lenkung).

Bekannt sind hydraulische oder elektro-hydraulische Lenkungen, die für den Fall, dass die Lenkpumpe ausfällt, eine zweite Lenkpumpe als redundante Komponente aufweisen. Dadurch soll sichergestellt werden, dass das Flurförderzeug auch nach Ausfall der ersten Lenkpumpe lenkbar ist und zumindest in eine sichere Position gebracht werden kann. Die Ausstattung mit redundanten Bauteilen ist erfahrungsgemäß mit hohen Kosten verbunden.

Auch ist es nach dem Stand der Technik bekannt, eine hydraulische Lenkung statt mit der zweiten Lenkpumpe mit einem Druckspeicher auszustatten. Die bekannten Druckspeicher geben im Bedarfsfall Energie an das Hydraulikmedium ab. Diese Energiezufuhr ermöglicht es ebenfalls, das Flurförderzeug in eine sichere Position zu bringen, in der dann zum Beispiel eine Reparatur durchgeführt werden kann. Dabei wird üblicherweise ein Druckspeicher eingesetzt, der auf einer Seite ein unter Druck stehendes Gaspolster, in der Mitte ein Membran und auf der anderen Seite das Hydraulikmedium aufweist. Diese Systeme sind aufgrund der wechselnden Druckbelastung der Membran nur sehr begrenzt haltbar. Aus diesem Grund sind die bekannten Systeme wartungsintensiv und teuer.

Der Erfindung liegt daher die Aufgabe zugrunde, die Lenkbarkeit eines Flurförderzeugs auf einfache und kostengünstige Weise sicherzustellen, zumindest für den Zeitraum, der erforderlich ist, um das Flurförderzeug in eine sichere Position zu bringen.

Diese Aufgabe wird vorrichtungsseitig dadurch gelöst, dass mindestens eine Gaserzeugungspatrone sowie ein Mittel zur Aktivierung einer Gaserzeugung vorgesehen sind. Dadurch steht mit besonderem Vorteil im Bedarfsfall Energie für den Hydraulikkreis einer hydraulischen Lenkung zur Verfügung. Auf Seiten der Gaserzeugungspatrone wird erst bei Bedarf für eine Energiezufuhr an den Hydraulikkreis Druck aufgebaut, der dann auf das Hydraulikmedium übertragbar ist. Somit steht ein vorteilhaftes Notenergieversorgungssystem für eine hydraulische Lenkung eines Flurförderzeugs zur Verfügung.

Bevorzugt ist eine Steuerung vorgesehen, über die das Mittel zur Aktivierung der Gaserzeugung ansteuerbar ist. Beispielsweise ist als Mittel zur Aktivierung der Gaserzeugung eine elektrische Aktivierung vorgesehen.

Besonders bevorzugt ist eine Drucküberwachung für einen Hydraulikkreis der hydraulischen Lenkung vorgesehen. Dadurch wird vorteilhaft eine Störung des Lenksystems auf einfache Weise erkannt, die beispielsweise durch den Ausfall der Lenkpumpe verursacht wird. Die Meßwerte der Drucküberwachung dienen zweckmäßigerweise als Eingangswerte für die Steuerung.

Vorteilhafterweise ist ein Behälter vorgesehen, mit dem die Gaserzeugungspatrone in Verbindung steht und dessen Inneres mit dem Hydraulikkreis der Lenkung verbindbar ist.

Gemäß einer weiteren vorteilhaften Ausgestaltung der Erfindung ist in dem Behälter eine Membran angebracht, die einen für Gas vorgesehenen Raum von einem für Hydraulikmedium vorgesehenen Raum trennt. Diese Membran ermöglicht den Einsatz einer breiten Palette von Gasen in der Gaserzeugungspatrone, da die Gase nicht mit dem Hydraulikmedium in Kontakt kommen.

Mit besonderem Vorteil ist als Gaserzeugungspatrone eine pyrotechnische Patrone vorgesehen. Beispielsweise wird dabei eine pyrotechnische Patrone, wie von Airbag-Systemen in PKWs bekannt, verwendet.

Gemäß einer anderen Ausführungsform der Erfindung ist als Gaserzeugungspatrone ein Gasdruckbehälter vorgesehen. Besonders bevorzugt ist ein mit Kohlendioxid gefüllter Gasdruckbehälter vorgesehen. Dabei kommen zweckmäßigerweise handelsübliche Kohlendioxiddruckbehälter zum Einsatz.

Der Erfindung ist der Vorteil zu eigen, dass die Gaserzeugungspatrone den Raum, in dem sie sich befindet, für eine bestimmte Zeitspanne mit Druck auflädt. Der beispielsweise durch die Membran begrenzte Gasraum erweitert sich, wodurch der Druck an das auf der anderen Seite der Membran befindliche Hydraulikmedium weitergegeben wird, und somit Energie beispielsweise zur Notversorgung der Lenkung eines Flurförderzeugs zur Verfügung steht. Mit besonderem Vorteil kann eine erfindungsgemäße Vorrichtung eine oder mehrere Gaserzeugungspatronen aufweisen. Mehrere Gaserzeugungspatronen kommen insbesondere als redundante Systeme zur Erhöhung der Zuverlässigkeit der Vorrichtung zum Einsatz.

Des Weiteren ist es von Vorteil, dass sich der Druck im Bedarfsfall beispielsweise mit Hilfe einer elektrischen Aktivierung der Gaserzeugung sehr schnell aufbaut.

Verfahrensseitig wird die gestellte Aufgabe dadurch gelöst, dass bei einem Absinken des Drucks in einem Hydraulikkreis der hydraulischen Lenkung eine Gaserzeugung aktiviert wird. Vorteilhaft wird die Gaserzeugung beim Absinken des Drucks unter einen bestimmten, vorab festzulegenden Grenzwert aktiviert.

Zweckmäßigerweise wird zur Gaserzeugung eine Gaserzeugungspatrone eingesetzt. Nach einer besonders bevorzugten Ausführungsform der Erfindung wird als Gaserzeugungspatrone eine pyrotechnische Patrone eingesetzt. Gemäß einer weiteren vorteilhaften Ausgestaltung der Erfindung wird als Gaserzeugungspatrone ein Gasdruckbehälter eingesetzt.

Bevorzugt wird eine Steuerung eingesetzt, durch die ein Mittel zur Aktivierung der Gaserzeugung ansteuerbar ist. Vorteilhaft werden dieser Steuerung die Meßwerte ein oder mehrere Meßgrößen aus dem Lenksystem als Eingangswerte zur Verfügung gestellt. Beispielsweise dienen als Eingangswerte für die Steuerung der Aktivierung der Gaserzeugung die Meßwerte einer Drucküberwachung. Darüber hinaus geht das vom Lenkrad oder Joystick kommende Sollsignal für die Fahrtrichtung als Eingangssignal in die beispielhafte Steuerung ein.

Besonders bevorzugt wird der Druck im Hydraulikkreis der Lenkung gemessen. Mit einer Überwachung des Drucks läßt sich vorteilhaft jede Störung im Hydraulikkreis schnell und sicher ermitteln. Ein Beispiel für eine derart ermittelbare Störung stellt der Ausfall der Lenkpumpe dar.

Eine Weiterbildung der Erfindung sieht vor, dass für den Fall, dass mindestens ein gemessener Druckwert einen bestimmten Grenzwert unterschreitet, die Gaserzeugung aktiviert wird.

Zweckmäßigerweise wird bei Aktivierung der Gaserzeugung das Gas in einen Behälter abgegeben, dessen Inneres mit dem Hydraulikkreis verbindbar ist. Mit besonderem Vorteil wird der Behälter so mit dem Hydraulikkreis verbunden, dass der durch die Gaserzeugung bedingte Druckaufbau im Behälter dem Druckabfall im Hydraulikkreis entgegenwirkt. Mit besonderem Vorteil wird beispielsweise durch eine in dem Behälter angebrachte Membran, die einen für Gas vorgesehenen Raum von einem für Hydraulikmedium vorgesehenen Raum trennt, der Druck, der durch die Aktivierung der Gaserzeugung in dem für Gas vorgesehenen Raum aufgebaut wird, auf das Hydraulikmedium übertragen.

Die Erfindung bietet eine ganze Reihe von weiteren Vorteilen:

Da eine erfindungsgemäße Lenkung als 1-Kreis-System aufgebaut ist und die Erfindung ein teures redundantes System, zum Beispiel eine zweite Lenkpumpe, überflüssig macht, wird eine Kostenreduzierung, eine Reduzierung des Platzbedarfs und der benötigten Bauteile, sowie eine Verringerung der Wartungsarbeiten erzielt.

Darüber hinaus wird zusätzlich zu der Einsparung von wartungsintensiven herkömmlichen Druckspeichern mit besonderem Vorteil eine große Energiemenge im Bedarfsfall sehr schnell und sicher zur Verfügung gestellt.

Im folgenden soll die Erfindung anhand von in den Figuren schematisch dargestellten Ausführungsbeispielen näher erläutert werden. Die Figuren zeigen:
- Figur 1: eine erfindungsgemäße Lenkung eines Flurförderzeugs mit Lenkzylinder, Lenkpumpe, Drucküberwachung, Steuerung und einem Behälter mit Gaserzeugungspatrone
- Figur 2: einen Behälter mit einer Gaserzeugungspatrone

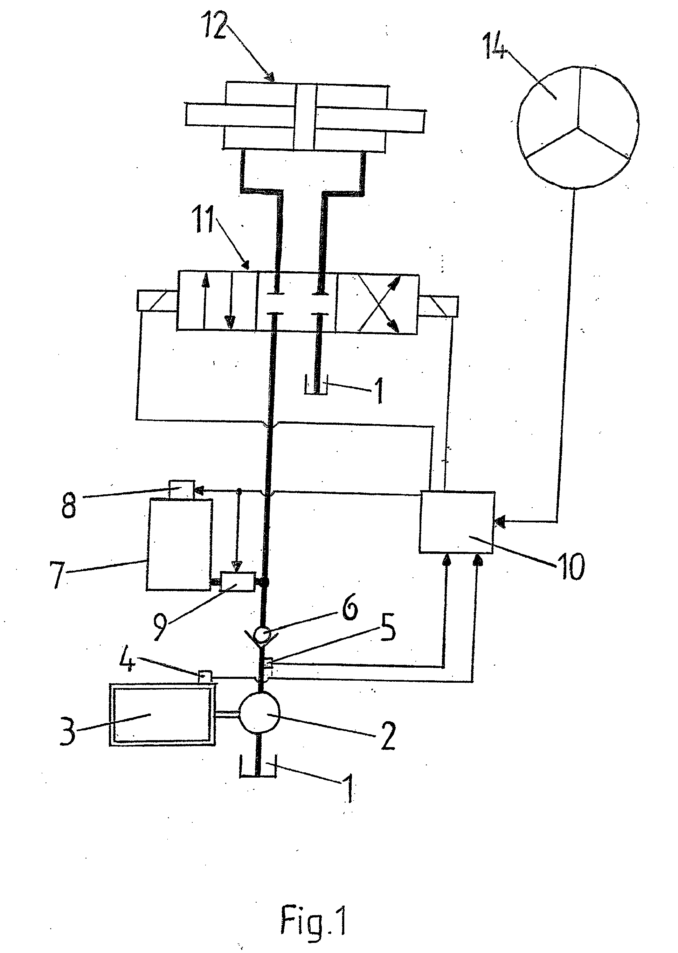

Im einzelnen zeigt Figur 1 einen Tank 1 für Hydraulikmedium und eine Lenkpumpe 2, die von einem Antrieb 3 angetrieben wird. In diesem Beispiel ist der Antrieb 3 mit dem Fahrantrieb des Flurförderzeugs identisch. Am Antrieb 3 ist ein Drehzahlsensor 4 angebracht.

Der Hydraulikkreis weist eine Drucküberwachung 5 und ein Rückschlagventil 6 auf. Über ein elektrisch entsperrbares Rückschlagventil 9 ist ein Behälter 7 mit dem Hydraulikkreis verbindbar. Am Behälter 7 ist eine Gaserzeugungspatrone 8 angebracht. Zur Steuerung der Lenkung und der Notenergieversorgung mittel der Gaserzeugungspatrone ist eine Steuerung 10 vorgesehen, die über Signalleitungen mit dem Drehzahlsensor 4, der Drucküberwachung 5, der Gaserzeugungspatrone 8, sowie einem elektrisch ansteuerbarem Lenkventil 11 und einem Lenkrad 14 in Verbindung steht. Statt dem Lenkrad 14 kann auch ein Joystick vorgesehen werden. Die möglichen Stellungen des Lenkventils 11 bestimmen die Zuordnung von Druckleitung und Rücklaufleitung zum Lenkzylinder 12. Die Rücklaufleitung ist mit dem Tank 1 verbunden.

Die beschriebene Vorrichtung weist folgende Funktionalität auf:

Die Lenkpumpe 2 wir vom Antrieb 3 angetrieben und saugt Hydraulikmedium aus dem Tank 1 an. Das Hydraulikmedium wird in den Hydraulikkreis eingespeist. Durch das Rückschlagventil 6 wird ein Rückfluß des Hydraulikmediums in Richtung der Lenkpumpe 2 verhindert. Der Hydraulikkreis wird durch das elektrisch ansteuerbare Lenkventil 11 so verschaltet, dass die Energie, die auf den Lenkzylinder 12 einwirkt, die Fahrtrichtung des Flurförderzeugs gemäß den am Lenkrad 14 durch einen Fahrer eingestellten Vorgaben für die Fahrtrichtung bestimmt. Dazu werden von der Steuerung 10 Soll-Signale vom Lenkrad 14 als Eingangswerte für die Steuerung empfangen. Die Steuerung 10 steuert das Lenkventil 11.

Des Weiteren verarbeitet die Steuerung 10 auch die Meßwerte der Drucküberwachung 5. Diese Meßwerte dienen als Eingangswerte zur Steuerung des Mittels zur Aktivierung der Gaserzeugungspatrone 8. (Die Mittel zur Aktivierung sind in der Figur 1 nicht dargestellt.) Für den Fall, dass der Druck im Hydraulikkreis unter einen vorbestimmten Wert absinkt, wird durch die Steuerung 10 das Mittel zur Aktivierung der Gaserzeugung angesteuert und die Gaserzeugung beispielsweise elektrisch aktiviert. Der Druckabfall im Hydraulikkreis wird zum Beispiel durch einen Ausfall der Lenkpumpe 2 ausgelöst.

Nach Aktivierung der Gaserzeugung strömt Gas in den Behälter 7, wodurch der Druck im Behälter 7 schlagartig erhöht wird. Diese Druckerhöhung wird auf das Hydraulikmedium übertragen, das über das Rückschlagventil 9 in den Behälter 7 eingelassen wird. Dadurch steht für eine bestimmte Zeit Energie für den Hydraulikkreis zur Verfügung, die erfindungsgemäß Bewegungen des Lenkzylinders 12 ermöglicht, bis das Flurförderzeug in eine sichere Position gebracht ist.

Nachdem das Flurförderzeug in eine sichere Position gebracht wurde, können Reparaturarbeiten durchgeführt werden, beispielsweise wird die Lenkpumpe 2 durch eine neue Lenkpumpe ersetzt.

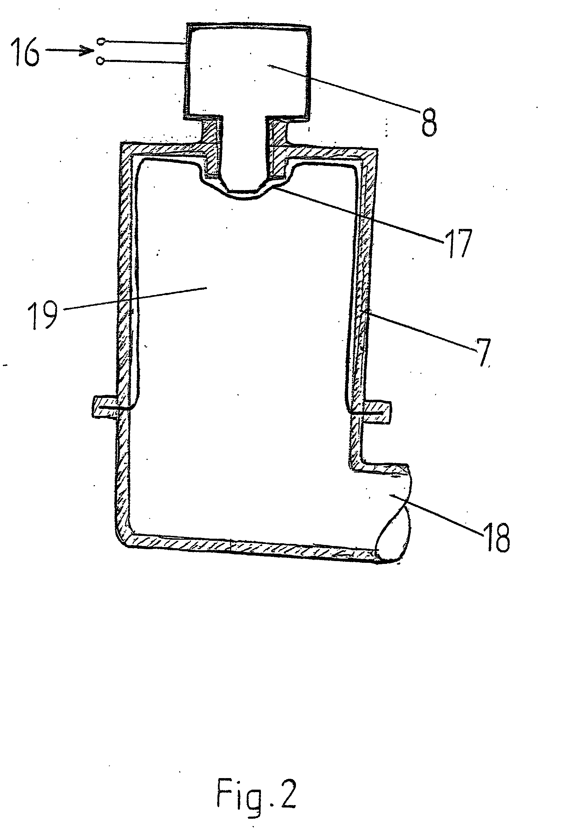

Die Figur 2 zeigt im einzelnen ein Gehäuse 7 mit einer Gaserzeugunggspatrone 8 und einem Verbindungsstutzen 18, sowie mit einer Membran 17, die den Raum 19 für das Hydraulikmedium von der Gaserzeugungspatrone 8 trennt. Die Gaserzeugung wird durch eine elektrische Aktivierung 16 ausgelöst. Durch den nach Aktivierung der Gaserzeugung ansteigenden Druck auf Seiten der Gaserzeugungspatrone 8 drückt die Membran 17 auf das in dem Raum 19 eingelassene Hydraulikmedium und überträgt somit Energie an das Hydraulikmedium. Der Einsatz der trennenden Membran 17 weist den Vorteil auf, dass auch Gase, die nicht mit dem Hydraulikmedium in Kontakt kommen dürfen, in der Gaserzeugungspatrone verwendet werden können.

Bei der Verwendung von Gasen, die sich gegenüber dem Hydraulikmedium inert verhalten, wird vorteilhaft ein Behälter ohne Membran eingesetzt.

## Patentansprüche

1. Vorrichtung zur Sicherstellung der Lenkbarkeit eines Flurförderzeugs mit einer hydraulischen Lenkung, **dadurch gekennzeichnet, dass** mindestens eine Gaserzeugungspatrone (8) sowie ein Mittel (16) zur Aktivierung einer Gaserzeugung vorgesehen sind.

2. Vorrichtung nach Anspruch 1, **dadurch gekennzeichnet, dass** eine Steuerung (10) vorgesehen ist.

3. Vorrichtung nach Anspruch 1 oder 2, **dadurch gekennzeichnet, dass** eine Drucküberwachung (5) für einen Hydraulikkreis der hydraulischen Lenkung vorgesehen ist.

4. Vorrichtung nach einem der Ansprüche 1 bis 3, **dadurch gekennzeichnet, dass** ein Behälter (7) vorgesehen ist, mit dem die Gaserzeugungspatrone (8) in Verbindung steht und dessen Inneres mit dem Hydraulikkreis der Lenkung verbindbar ist.

5. Vorrichtung nach Anspruch 4, **dadurch gekennzeichnet, dass** in dem Behälter (7) eine Membran (17) angebracht ist, die einen für Gas vorgesehenen Raum von einem für Hydraulikmedium vorgesehenen Raum (19) trennt.

6. Vorrichtung nach einem der Ansprüche 1 bis 5, **dadurch gekennzeichnet, dass** als Gaserzeugungspatrone (8) eine pyrotechnische Patrone (8) vorgesehen ist.

7. Vorrichtung nach einem der Ansprüche 1 bis 6, **dadurch gekennzeichnet, dass** als Gaserzeugungspatrone (8) ein Gasdruckbehälter (8) vorgesehen ist.

8. Verfahren zur Sicherstellung der Lenkbarkeit eines Flurförderzeugs mit einer hydraulischen Lenkung, **dadurch gekennzeichnet, dass** bei einem Absinken des Drucks in einem Hydraulikkreis der hydraulischen Lenkung eine Gaserzeugung aktiviert wird.

9. Verfahren nach Anspruch 8, **dadurch gekennzeichnet, dass** zur Gaserzeugung eine Gaserzeugungspatrone (8) eingesetzt wird.

10. Verfahren nach Anspruch 8 oder 9, **dadurch gekennzeichnet, dass** eine Steuerung (10) eingesetzt wird, durch die ein Mittel (16) zur Aktivierung der Gaserzeugung ansteuerbar ist.

11. Verfahren nach einem der Ansprüche 8 bis 10, **dadurch gekennzeichnet, dass** der Druck im Hydraulikkreis der Lenkung gemessen wird.

12. Verfahren nach einem der Ansprüche 8 bis 11, **dadurch gekennzeichnet, dass** für den Fall, dass mindestens ein gemessener Druckwert einen bestimmten Grenzwert unterschreitet, die Gaserzeugung aktiviert wird.

13. Verfahren nach einem der Ansprüche 8 bis 12, **dadurch gekennzeichnet, dass** bei Aktivierung der Gaserzeugung das Gas in einen Behälter (7) abgegeben wird, dessen Inneres mit dem Hydraulikkreis verbindbar ist.

14. Verfahren nach Anspruch 13, **dadurch gekennzeichnet, dass** der Behälter (7) so mit dem Hydraulikkreis verbunden wird, dass der durch die Gaserzeugung bedingte Druckaufbau im Behälter (7) dem Druckabfall im Hydraulikkreis entgegenwirkt.
